# EUROPÄISCHE PATENTSCHRIFT

(11) **EP 0 575 402 B1**
(45) Veröffentlichungstag und Bekanntmachung des Hinweises auf die Patenterteilung: **29.11.1995**
(21) Anmeldenummer: 92906258.6
(22) Anmeldetag: 03.03.1992
(51) Int. Cl.: B60H 1/03, B60H 1/00

(54) **VERFAHREN ZUR KÜHLUNG VON ANTRIEBSKOMPONENTEN UND ZUR HEIZUNG EINES FAHRGASTRAUMES EINES KRAFTFAHRZEUGES, INSBESONDERE EINES ELEKTROMOBILS, UND EINRICHTUNG ZUR DURCHFÜHRUNG DES VERFAHRENS**
PROCESS FOR COOLING DRIVE COMPONENTS AND HEATING THE PASSENGER COMPARTMENT OF A MOTOR VEHICLE, ESPECIALLY AN ELECTRICALLY DRIVEN VEHICLE, AND ARRANGEMENT FOR IMPLEMENTING THE PROCESS
PROCEDE POUR LE REFROIDISSEMENT D'ELEMENTS MOTEURS ET POUR LE CHAUFFAGE DE L'HABITACLE D'UN VEHICULE AUTOMOBILE, EN PARTICULIER D'UN VEHICULE ELECTRIQUE, ET DISPOSITIF POUR LA REALISATION DU PROCEDE

(30) Priorität: 19.03.1991 DE 4108958
(43) Veröffentlichungstag der Anmeldung: 29.12.1993
(73) Patentinhaber: Behr GmbH & Co., D-70469 Stuttgart (DE)
(72) Erfinder: BURK, Roland, D-7014 Kornwestheim (DE); HECKENBERGER, Thomas, D-7022 Leinfelden-Echterdingen (DE); KRAUSS, Hans-Joachim, D-7000 Stuttgart 80 (DE); LÖHLE, Michael, D-7300 Esslingen (DE)
(74) Vertreter: Riedel, Peter, Dipl.-Ing.
(86) Internationale Anmeldenummer: EP9200466
(87) Internationale Veröffentlichungsnummer: WO9216389

(56) Entgegenhaltungen:
- EP-A- 0 008 384
- DE-A- 2 006 802
- DE-A- 2 451 221
- DE-U- 9 001 590
- US-A- 1 880 493
- US-A- 2 780 077
- US-A- 4 220 197

## Beschreibung

Die Erfindung bezieht sich auf ein Verfahren zur Kühlung von Antriebskomponenten und zur Heizung eines Fahrgastraumes eines Kraftfahrzeugs, insbesondere eines Elektromobils, und eine Einrichtung zur Durchführung des Verfahrens.

Die bisher üblichen Kraftfahrzeuge besitzen einen Verbrennungsmotor, bei dem eine große Menge der zugeführten Energie in Wärme umgesetzt wird, die als Verlustwärme in einem Kühler an die Umgebungsluft abgegeben wird. Die nach einer Warmlaufphase der Brennkraftmaschine zur Verfügung stehende Wärmemenge ist größer als der selbst an kalten Wintertagen benötigte Energiebedarf für die Fahrzeugheizung.

Es sind jedoch bereits alternative Antriebskonzepte vorgeschlagen worden, beispielsweise mittels Elektromotor, dessen Energie von einer Batterieinheit geliefert wird. Auch bei solchen Antriebssystemen entsteht eine gewisse Verlustwärme im Antriebsmotor, im Getriebe, in der Leistungssteuerung, in der Batterieeinheit und ggf. in weiteren Komponenten. Diese Verlustwärme reicht von der Wärmemenge her für einen Heizbetrieb des Fahrgastraumes in keiner Weise aus, insbesondere nicht bei niedrigen Außentemperaturen.

Zur Kühlung der Antriebskomponenten ist bereits vorgeschlagen worden, entsprechende Kühlkanäle für ein flüssiges Kühlmittel vorzusehen, so daß das Kühlmittel alle Komponenten mit Wärmeentwicklung durchströmen kann und aus diesen die Wärmeenergie abführt. Bei der aus dem DE-GM 90 01 590 bekannten Anordnung wird die Wärme einem Kühler oder einem im Zulaufkanal angeordneten Wärmetauscher an einen Luftstrom abgegeben. Die Kabinenluft wird umgewälzt, wobei ein Teilstrom an die Umgebungsluft abgegeben und Frischluft zugeführt wird.

Es ist die Aufgabe der vorliegenden Erfindung ein Verfahren zur Kühlung von Antriebskomponenten und zur Heizung eines Fahrgastraumes eines Kraftfahrzeugs zu schaffen, bei dem die vorhandenen Energiequellen in exergetischer Hinsicht optimal genutzt und dabei die Kühlung der Antriebskomponenten unter Berücksichtigung aller möglicher Klimabedingungen bei verbesserter Wärmerückgewinnung sichergestellt wird. Es ist außerdem die Aufgabe der Erfindung, eine Einrichtung zur Durchführung dieses Verfahrens zu schaffen.

Ausgehend von einem Verfahren der im Oberbegriff des Anpruchs 1 angegebenen Gattung, wird die genannte Aufgabe erfindungsgemäß durch die kennzeichnenden Merkmale des Anspruchs 1 gelöst.

Der wesentliche Vorteil besteht hierbei darin, daß die Wärme der im Fahrgastraum befindlichen Luft in sinnvoller Weise zurückgewonnen wird, so daß lediglich ein unvermeidbarer Wärmeverlust durch die in dem Fahrzeug vorhandenen Wärmequellen wieder kompensiert werden muß.

Die vorstehend genannte Aufgabe bzgl. der Schaffung einer Einrichtung zum Kühlen eines Antriebsmotors und zum Heizen eines Fahrgastraumes eines Fahrzeugs, der im Oberbegriff des Anspruchs 5 angegebenen Gattung, wird erfindungsgemäß durch die kennzeichnenden Merkmale des Anspruchs 5 gelöst.
Der wesentliche Vorteil dieser Einrichtung besteht darin, daß aufgrund der Steuerelemente und des Gebläses stets ein ausreichender Kühlluftstrom durch den Wärmetauscher bereitgestellt wird, wohingegen die aus dem Wärmetauscher abgeführte Wärmeenergie und auch die im Umluftstrom des Luftführungskanals enthaltene Wärmeenergie lediglich im Bedarfsfall und entsprechend der benötigten Wärmemenge gezielt dem Fahrgastraum zugeführt wird.

Eine bzgl. der erforderlichen Anlagenteile einfacher gestaltete Einrichtung besteht darin, daß ein weiterer vom Kühlmittel durchströmbarer Wärmetauscher vorgesehen ist, der in einem an einer zweiten Abluftöffnung beginnenden Fortluftkanal des Fahrgastraumes angeordnet ist, und wobei zwischen der zweiten Abluftöffnung und dem Wärmetauscher ein Zuströmsteuerelement vorgesehen ist, in das ein Kühlluftkanal mündet.

An den Kühlkreislauf können weitere Zusatzaggregate mit Wärmeentwicklung angeschlossen sein und für die Umwälzung des Kühlmittels ist eine Kühlmittelpumpe vorgesehen, die von einem Elektromotor angetrieben wird. Um eine optimale Auslegung des Wärmetauschers zu erreichen, ist es zweckmäßig, wenn diesem die Kühlflüssigkeit mit einem relativ konstanten Temperaturniveau zugeleitet wird. Zu diesem Zweck ist vor Eintritt des Kühlmittels in den Wärmetauscher ein Wärmespeicher vorgesehen, der die extremen Schwankungen der Wärmeentwicklung in den einzelnen Komponenten kompensiert. Besonders geeignet ist an dieser Stelle ein Latentwärmespeicher, durch den es möglich ist, nach einer auch mehrstündigen Fahrtunterbrechung sofort wieder Wärmeenergie zum Heizen des Fahrgastraumes zur Verfügung zu haben.

Ein weiterer Vorteil ergibt sich dadurch, daß dem Anteil der aus dem Fahrgastraum abzuführenden Fortluft die Wärme und Feuchtigkeit entzogen wird und wieder für die Zuluft zur Verfügung steht. Aus diesem Grund ist ein Fortluft/Frischluft-Wärmetauscher vorgesehen, in welchem die Frischluft durch die der Fortluft entzogenen Wärme vorgeheizt wird. Die Wärmerückgewinnung aus der Fortluft erlaubt einen ausreichenden Frischluftanteil, um eine aus Sicherheitsaspekten und Komfortgründen akzeptable Innenraumfeuchte nicht zu überschreiten.

Zur weiteren Komfortsteigerung wird ein einen Verdampfer und einen Kondensator umfassender Kältemittelkreislauf vorgesehen, wodurch es möglich ist, bei hohen Außentemperaturen dem Fahrgastraum gekühlte Luft zuzuführen. Auf diese Weise ist eine allen klimatischen Bedingungen gerecht werdende Temperierung des Fahrgastraumes möglich. Im "Winterbetrieb" arbeitet der Kältemittelkreislauf als Wärmepumpe und liefert somit einen zusätzlichen Anteil zur Heizenergie. Die Anordnung weiterer Wärmequellen kann vorgesehen sein, hierbei sind insbesondere elektrische Zusatzheizungen in Betracht zu ziehen. Während der Aufladephase der Fahrzeugbatterie kann die Luft im Fahrgastraum mit der an der Batterie anfallenden Abwärme geheizt werden. Durch geeignete Steuerung der elektrischen Zusatzheizung kann der Innenraum während des Aufladens zusätzlich beheizt werden, so daß bei Fahrtantritt bereits ein warmer Fahrgastraum zur Vefügung steht.Die Einrichtung zum Heizen bzw. Klimatisieren des Fahrgastraumes und zum Kühlen der Antriebseinrichtung kann luftseitig oder auch flüssigkeitsseitig gesteuert sein. Für eine flüssigkeitsseitige Steuerung wird ein erweiterter Kühlkreislauf vorgesehen, der zwei getrennte Strömungszweige umfaßt und jedem der Strömungszweige ein Kühlmittel/Luft-Wärmetauscher zugeordnet ist. Dabei sind Ventilmittel vorgesehen, durch die die Strömungszweige zur wahlweisen Durchströmung der Wärmetauscher umgeschaltet werden können.

Ausführungsbeispiele des Erfindungsgegenstandes sind nachstehend anhand der Zeichnung näher erläutert:

In der Zeichung zeigt:
- **Fig. 1**: die schematische Darstellung einer kombinierten Motorkühlungs- und Fahrgastraum-Heizungsanlage für ein Elektrofahrzeug;
- **Fig. 2a** und **Fig. 2b**: eine kombinierte Motorkühlungs- und Fahrgastraum-Klimatiseierungsanlage, einmal in der Funktion "heizen" und einmal in der Funktion "kühlen'' des Fahrgastraumes;
- **Fig. 3a** und **Fig. 3b**: eine Ausführungsvariante zu Fig. 2 mit einem erweiterten Kühlmittel kreis und flüssigkeitsseitiger Rege lung des Heiz- bzw. Klimatisierungs betriebs;
- **Fig. 4a** und **Fig. 4b**: eine alternative Ausführung zu Fig. 3.
- **Fig. 5a** und **Fig. 5b**: eine Ausführungsvariante zu Fig. 2 mit Luft- und flüssigkeitsseitiger Regelung.

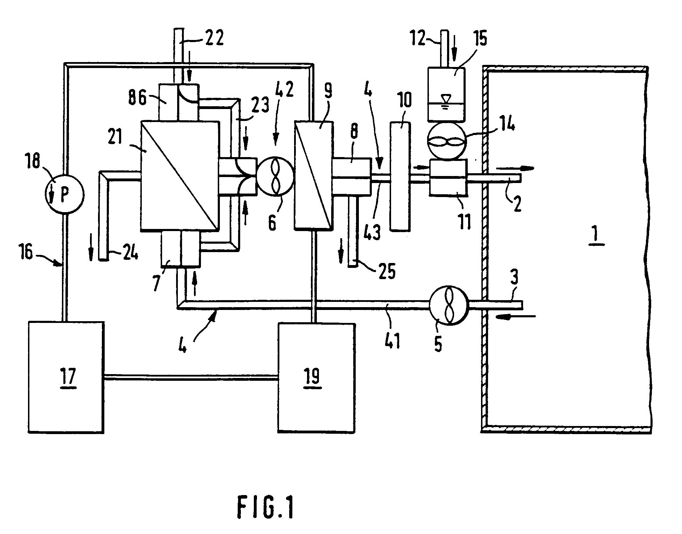

In **Fig. 1** ist mit dem Bezugszeichen 1 ein Fahrgastraum eines Elektrofahrzeugs bezeichnet, in dem eine Zuluftöffnung 2 und eine Abströmöffnung 3 vorgesehen sind. Die Abströmöffnung 3 bildet den Anfang eines Luftführungskanals 4, welcher an der Zuluftöffnung 2 mündet und im wesentlichen 3 Abschnitte 41, 42 und 43 umfaßt. Der erste Abschnitt 41 des Luftführungskanals 4 erstreckt sich bis zu einem ersten Luftstromsteuerelement 7 und in diesem Abschnitt 41 befindet sich ein Gebläse 5. Der zweite Abschnitt 42 des Luftführungskanals 4 beginnt bei dem ersten Luftstromsteuerelement 7 und erstreckt sich bis zu einem zweiten Luftstromsteuerelement 8, wobei in diesem zweiten Abschnitt 42 ein Gebläse 6 und ein Wärmetauscher 9 zur Kühlung des Antriebsaggregates 17 angeordnet sind.

Von dem zweiten Luftstromsteuerelement 8 erstreckt sich der dritte Abschnitt 43 des Luftführungskanals 4 bis zu der Zuluftöffnung 2 am Fahrgastraum 1. Dieser dritte Abschnitt 43 führt durch eine Wärmequelle 10 zu einer Luftmischkammer 11, die unmittelbar oder nahe vor der Zuluftöffnung 2 angeordnet ist. In die Luftmischkammer 11 mündet eine Kaltluftleitung 12, durch die ein Anteil von Kalt- bzw. Frischluft dem in dem Abschnitt 43 geführten Luftstrom beigemischt wird. Zur Bereitstellung der erforderlichen Frischluft bzw. Kaltluftmenge ist in der Kaltluftleitung 12 ein Gebläse 14 vorgesehen. Zur Abkühlung der Luft in der Kaltluftleitung 12 ist gemäß Fig. 1 ein Verdunstungskühler 15 angeordnet.

Der vom Luftstrom im zweiten Abschnitt 42 des Luftführungskanals 4 durchströmte Wärmetauscher 9 wird auf der anderen Seite der Wärmetauschwände vom Kühlmittel eines Kühlkreislaufs 16 für das Antriebsaggregat 17 des Elektrofahrzeugs beaufschlagt. Dabei dient das Kühlmittel des Kühlkreislaufs 16 nicht nur zur Kühlung des Antriebsmotors selbst, sondern unter Antrieb sei hier die Gesamtanordnung aus Motor, Getriebe, Leistungssteuerung und Batterieeinheit zu verstehen. In dem Kühlkreislauf 16 befindet sich eine Kühlmittelpumpe 18 zur Bewegung des Kühlmittels. Wegen der enormen Schwankungen der Wärmeentwicklung in den Komponenten des Antriebs 17 ist ein puffernder Wärmespeicher 19, der vorzugsweise als Latentwärmespeicher ausgebildet ist, vorgesehen, durch den die Temperaturschwankungen gedämpft werden und somit die dem Wärmetauscher 9 zugeführte Wärme auf einem innerhalb bestimmter Grenzen relativ konstant gehaltenen Niveau bleibt.

Von dem ersten Luftstromsteuerelement 7 führt ein Strömungsweg durch einen Luft/Luft-Wärmetauscher 21, durch den andererseits ein Frischluftkanal 22 in den zweiten Abschnitt 42 des Luftführungskanals 4 führt. Während die durch den Strömungsweg geführte Luft stets den Wärmetauscher 21 beaufschlagt, ist für die andere Seite des Wärmetauschers 21 eine Bypassleitung 23 vorgesehen, die mittels einer Luftklappe 86 bzgl. ihres Luftdurchsatzes steuerbar ist. Hierdurch kann eine Vereisung des Wärmetauschers bei tiefen Außentemperaturen vermieden werden. Die durch den Strömungsweg geführte Luft wird durch eine entsprechende Ausblasöffnung 24 in die Umgebung abgegeben. Das zweite Luftstromsteuerelement 8 besitzt neben der Ausgangsöffnung für den dritten Abschnitt 43 des Luftführungskanals 4 einen zweiten Ausgang für einen Fortluftkanal 25, durch den die nicht zum Fahrgastraum 1 zurückgeführte Luft in die Umgebungsluft abgegeben wird.

Der Heizbetrieb für den Fahrgastraum ist von mehreren Einflüssen abhängig, vorrangig jedoch von den Umgehungstemperaturen, von der Sonneneinstrahlung und von der Innenraumtemperatur im Fahrgastraum. Daher ist die Funktion "Heizen" und die benötigte Wärmemenge bedarfsabhängig einzustellen, wohingegen die Kühlung des Antriebs im Fahrbetrieb des Elektrofahrzeugs stets benötigt wird, wenn auch der Kühlleistungsbedarf gewissen Schwankungen unterworfen ist, die beispielsweise klimatisch oder durch das Leistungsprofil bestimmt sind.

Die Kühlung des Antriebs erfolgt dadurch, daß das Kühlmittel durch entsprechende Kühlkanäle des Motors, des Getriebes, der Batterie (ggf. mit einem Zwischenwärmeträgerkreislauf) und der Leistungssteuerung fließt, wobei das Kühlmittel im Kühlkreislauf 16 mit Hilfe der Kühlmittelpumpe 18 bewegt wird. Die Wärmeerzeugung und die somit abzuführende Wärmemenge unterliegen extremen Schwankungen, insbesondere bei Lastwechseln wie Beschleunigung, Abbremsung usw. Damit der Wärmetauscher 9 bzgl. seiner Abmessungen nicht unnötig groß ausgeführt werden muß, besitzt der Wärmespeicher 19 die Funktion eines thermischen Puffers, der in der Lage ist, die häufig nur kurzzeitig auftretenden Wärmemengen aufzunehmen und das Kühlmittel mit einem relativ konstanten Temperaturniveau dem Wärmetauscher 9 zuzuführen. Die im Kühlmittel enthaltene Wärme wird in dem Wärmetauscher 9 an die durch den zweiten Abschnitt 42 des Luftführungskanals 4 strömende Luft abgegeben.

Wird das Fahrzeug bei Außentemperaturen betrieben, die eine Heizung des Fahrgastraums 1 nicht erforderlich machen, so wird der zur Wärmeaufnahme im Wärmetauscher 9 erforderliche Luftstrom, der durch das Gebläse 6 erzeugt wird, mindestens annähernd vollständig durch den Frischluftkanal 22 angesaugt und durch den Kühler zu dem zweiten Luftstromsteuerelement 8 geblasen. Da kein Heizungsbedarf für den Fahrgastraum 1 besteht, befindet sich das zweite Luftstromsteuerelement 8 in einer Stellung, die das gesamte durch den Wärmetauscher 9 geblasene Luftvolumen durch den Fortluftkanal 25 ins Freie leitet.

Wegen des von den Fahrzeuginsassen benötigten Sauerstoffs muß ein gewisses Luftvolumen im Fahrgastraum ständig erneuert werden. Zu diesem Zweck erzeugt das Gebläse 14 einen Luftstrom in der Kaltluftleitung 12, wobei, je nach Bedarf, die Temperatur der Frischluft in dem Verdunstungskühler 15 abgesenkt werden kann. Diese kalte Luft wird dann durch die Luftmischkammer 11 und die Zuluftöffnung 2 in den Fahrgastraum 1 geleitet. Das gleiche Luftvolumen wird an anderer Stelle aus dem Fahrgastraum, nämlich an der Abströmöffnung 3, abgezogen und mittels des Gebläses 5 durch den ersten Abschnitt 41 des Luftführungskanal 4 sowie den Wärmetauscher 21 transportiert und dann durch die Ausblasöffnung 24 an die Umgebungsluft abgegeben.

Besteht ein Heizungsbedarf für den Fahrgastraum 1, so wird zunächst Einfluß auf das zweite Luftstromsteuerelement 8 genommen, welches die in dem Wärmetauscher 9 erwärmte Luft teilweise oder vollständig durch den dritten Abschnitt 43 des Luftführungskanals 4 der Zuluftöffnung 2 des Fahrgastraums 1 zu leitet.

Sofern die in dem Wärmetauscher 9 übertragene Wärmemenge zur Beheizung des Fahrgastraums 1 nicht ausreicht, wird die durch den Frischluftkanal 22 einströmende Luft in dem Wärmetauscher 21 vorgewärmt, indem der Fortluft im Wärmetauscher 21 die Wärmeenergie entzogen wird. Die Bypass-Leitung 23 ist in diesem Fall geschlossen. Da die Wärmeübertragung im Wärmetauscher 21 nicht verlustfrei erfolgen kann ist es auch möglich, einen Teil der aus dem Fahrgastraum 1 durch die Abströmöffnung 3 gesaugten Luft unter Umgehung des Wärmetauschers 21 direkt von dem ersten Abschnitt 41 dem zweiten Abschnitt 42 zuzuleiten, was mit Hilfe des ersten Luftstromsteuerelementes 7 erfolgt.

Dieser dem Fahrgastraum 1 entzogene Luftstromanteil hat ein wesentlich höheres Temperaturniveau als beispielsweise die Umgebungsluft an kalten Wintertagen, so daß die Aufheizung des Luftstroms im Wärmetauscher 9 von einem bedeutend höheren Temperaturniveau aus erfolgt, was eine entsprechende Differenz zwischen den Temperaturen der an der Abströmöffnung 3 abgesaugten und der an der Zuluftöffnung 2 eingeblasenen Luft ermöglicht. In solchen Fällen mit extremem Heizungsbedarf ist selbstverständlich der Kaltluftkanal 12 verschlossen.

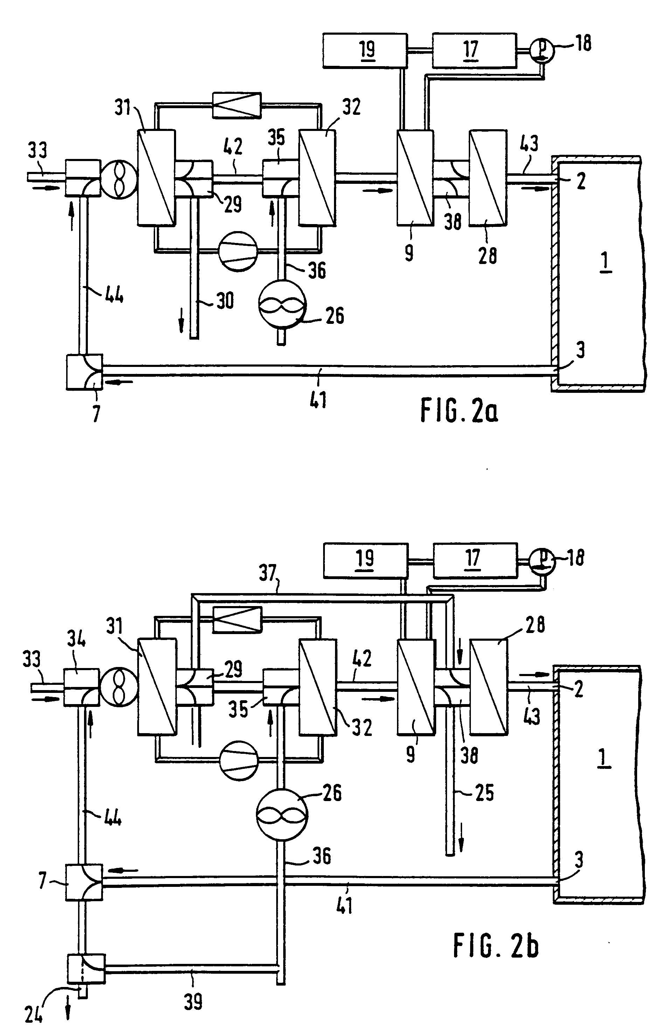

In **Fig. 2 a** und **2 b** ist eine kombinierte Motorkühlungs- und Fahrgastraumklimatisierungsanlage gezeigt, und zwar in Fig. 2a die Funktion "Heizen des Fahrgastraums" - der sogenannte Winterbetrieb - und in Fig. 2b die Funktion "Kühlen des Fahrgastraums" - der sogenannte Sommerbetrieb -. An dem Fahrgastraum 1 ist eine Abströmöffnung 3 vorhanden, von der sich der erste Abschnitt 41 des Luftführungskanals erstreckt, an dessen Ende das erste Luftstromsteuerelement 7 angeordnet ist. Das erste Luftstromsteuerelement 7 kann den Luftstrom zur Ausblasöffnung 24 und zu einem vierten Abschnitt 44 des Luftführungskanals in beliebigen Anteilen steuern, wobei der Steuerungsbereich zwischen 0% und 100% in eine der beiden möglichen Richtungen liegt und in die andere Richtung der jeweils komplementäre Anteil strömt.

Der vierte Abschnitt 44 erstreckt sich von dem ersten Luftstromsteuerelement 7 zu einem Strömungsmengenteiler 29, welcher den Luftstrom wahlweise zu dem Wärmetauscher 9 oder direkt zu der Zuluftöffnung 2 oder zu einem Abluftkanal 30 leitet. Die Anlage umfaßt außerdem einen Kältemittelkreislauf, dessen Verdampfer 31 in dem vierten Abschnitt 44 und dessen Kondensator 32 in dem zweiten Abschnitt 42, und zwar unmittelbar vor dem Kühler 9, angeordnet sind. Zur Ergänzung des Luftvolumens, das je nach Stellung des ersten Luftstromsteuerelementes 7 durch die Ausblasöffnung 24 abgegeben wird, ist ein Frischluftkanal 33 vorgesehen, der mittels eines Zuströmsteuerelementes 34 absperrbar ist.

Von dem Strömungsmengenteiler 29 ausgehend ist in dem zweiten Abschnitt 42 des Luftführungskanals zunächst ein Zuströmsteuerelement 35 angeordnet, das den Zustrom von Frischluft durch einen Frischluftkanal 36 steuert, wobei in diesem Frischluftkanal ein Gebläse 26 angeordnet ist. Dem Wärmetauscher 9 nachgeordnet ist ein Luftstromsteuerelement 38, an dem der zweite Abschnitt 42 des Luftführungkanals endet und an das sich der dritte Abschnitt 43 sowie der Fortluftkanal 25 anschließen. In das Luftstromsteuerelement 38 mündet ein Bypass 37, der - ausgehend von dem Strömungsmengenteiler 29 - den Kondensator 32 und Wärmetauscher 9 überbrückt. Im dritten Abschnitt 43 ist die elektrische Zusatzheizung 28 angeordnet und das Ende des Luftführungskanals bildet die Zuluftöffnung 2 im Fahrgastraum 1.

Bei dem in **Fig. 2 a** dargestellten "Winterbetrieb" wird die Luft aus dem Fahrgastraum 1 durch die Abströmöffnung 3 abgesaugt und durch den ersten Abschnitt 41 dem ersten Luftstromsteuerelement 7 zugeleitet. Entsprechend der Stellung des Luftstromsteuerelementes 7 wird der gesamte Luftstrom dem vierten Abschnitt 44 zugeleitet und durchströmt den Verdampfer 31. Der Strömungsmengenteiler 29 zweigt einen Teil des Gesamtstromes ab, der dann durch den Fortluftkanal 30 ins Freie geleitet wird. Der andere Teil des Gesamtluftstroms wird aufgrund der Stellung des Strömungsmengenteilers 29 dem Kondensator 32 zugeführt, wobei noch vor Eintritt in den Kondensator 32 durch den Frischluftkanal 36 das Luftvolumen ergänzt wird, welches vom Strömungsmengenteiler 29 dem Fortluftkanal 30 zugeführt wurde.

In dem Verdampfer wird die Luft abgekühlt und somit auch entfeuchtet, wobei Wärmeenergie dem Luftstrom entzogen und an das Kältemittel abgegeben wird. Diese Wärmeenergie wird im Kondensator 32 wieder auf den Luftstrom im zweiten Abschnitt 42 übertragen, so daß dort bereits eine Erwärmung des Luftstroms erfolgt. Der Wärmerückgewinn im Verdampfer 31 wird dadurch gesteigert, daß vor diesem im Luftsrömungsweg ein Trockner angeordnet ist, so daß der Luftstrom unter 0°C abgekühlt werden kann. In dem nachgeschalteten Wärmetauscher 9 erfolgt eine weitere Anhebung der Temperatur des Luftstroms, der dann durch das Luftstromsteuerelement 38 dem Fahrgastraum 1 zugeleitet wird, wobei ggf. noch eine weitere Anhebung des Temperaturniveaus durch eine elektrische Zusatzheizung 28 erfolgen kann.

Beim "Sommerbetrieb" der Anordnung soll dem Fahrgastraum 1 gekühlte Luft zugeführt werden, gleichzeitig muß jedoch die Kühlung des Antriebs gewährleistet sein. Diese Funktionsweise ist in **Fig. 2b** dargestellt. Der durch den ersten Abschnitt 41 aus dem Fahrgastraum 1 abgesaugte Luftstrom wird in dem ersten Luftstromsteuerelement 7 aufgeteilt, wobei ein Teil dem vierten Abschnitt 44 zugeführt und der andere Teil über eine Verbindungsleitung 39 dem Frischluftkanal 36 zugeleitet und in diesem der einströmenden Frischluft beigemengt wird. Dieser Luftstrom beaufschlagt dann den Kondensator 32, in welchem das Kältemittel verflüssigt und dadurch abgekühlt wird. Dieser aus dem Kondensator austretende Luftstrom beaufschlagt dann den Wärmetauscher 9, um schließlich aufgrund der Stellung des Luftstromsteuerelements 38 durch die Fortluftleitung 25 in die Umgebungsluft abgegeben zu werden.

Aufgrund der Luftstromaufteilung hat der Luftstrom im vierten Abschnitt 44 unmittelbar nach dem Luftstromsteuerelement 7 ein reduziertes Volumen, das durch Zufuhr von Frischluft im Frischluftkanal 33 wieder ergänzt wird. Dieser Luftstrom beaufschlagt dann den Verdampfer 31, in welchem dem Luftstrom Wärmeenergie entzogen wird, was eine Temperaturabsenkung und damit verbundene Entfeuchtung der Luft zur Folge hat. Aufgrund der Stellung des Strömungsmengenteilers 29 wird der aus dem Verdampfer 31 austretende Luftstrom vollständig dem Bypass 37 zugeführt, so daß der Kondensator 32 und der Wärmetauscher 9 umgangen werden, und gelangt dann durch die Zuluftöffnung 2 in den Fahrgastraum 1. Die Zusatzheizung 28 ist in diesem Fall selbstverständlich nicht eingeschaltet.

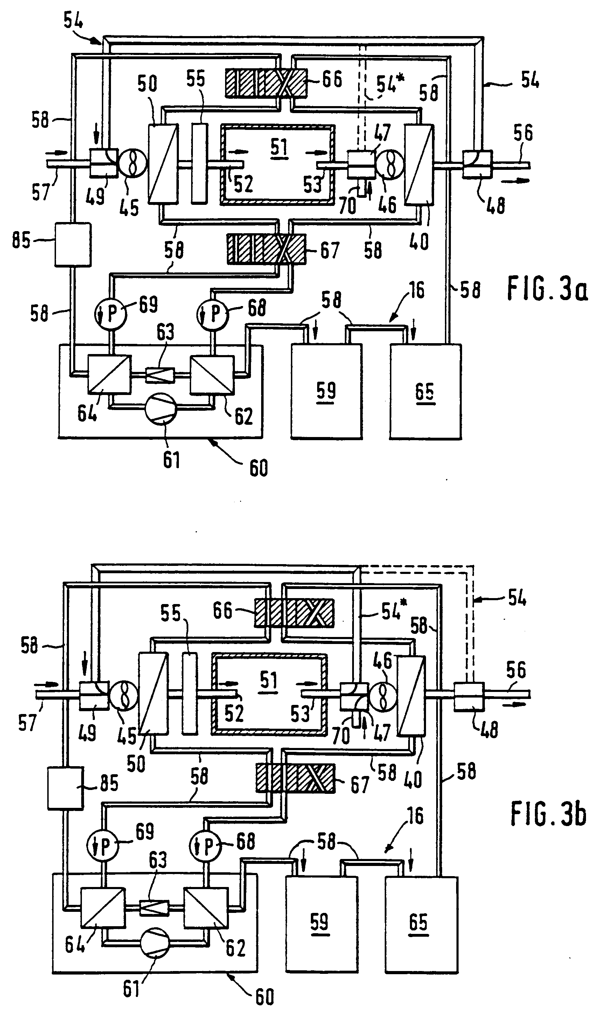

Die in **Fig. 3 a** und **Fig. 3 b** gezeigte Kühleinrichtung für einen Antrieb und eine Klimatisierungseinrichtung für den Fahrgastraum umfaßt einen Kühlmittelkreis mit dessen Hilfe eine flüssigkeitsseitige Regelung des Gesamtsystems möglich ist. Dabei zeigt Fig. 3 a wieder den "Winterbetrieb", d.h. bei Heizungsbedarf des Fahrgastraums und Fig. 3 b den "Sommerbetrieb", d.h. dem Fahrgastraum wird gekühlte Luft zugeführt.

In **Fig. 3 a** und **3 b** ist mit 51 ein Fahrgastraum bezeichnet, der mit einer Zuluftöffnung 52 und einer Abströmöffnung 53 versehen ist. Ein insgesamt mit 54 bezeichneter Luftführungskanal beginnt an der Abströmöffnung 53 und endet an der Zuluftöffnung 52. In dem Luftführungskanal 54 sind in der genannten Reihenfolge ein erstes Luftstromsteuerelement 47, ein Gebläse 46, ein erster Wärmetauscher 40, ein zweites Luftstromsteuerelement 48, ein Zuströmsteuerelement 49, ein weiteres Gebläse 45, ein zweiter Wärmetauscher 50 und schließlich eine Zusatzheizung 55 angeordnet. Mit 56 ist ein Fortluftkanal bezeichnet, durch den die Fortluft bzw. der Fortluftanteil mittels des zweiten Luftstromsteuerelementes 48 in die Umgebungsluft geleitet werden kann. Ein Frischluftkanal 57 mündet in das Zuströmsteuerventil 49, bzw. an dieser Stelle in den Luftführungskanal 54. Ein Bypass 54* überbrückt bei entsprechender Stellung des ersten Luftstromsteuerelementes 47 das nachgeordnete Gebläse 46, den ersten Wärmetauscher 40 und das zweite Luftstromsteuerelement 48.

Die Wärmetauscher 40 und 50 werden von einem flüssigen Kühlmittel beaufschlagt, das in einen Kühlkreislauf für die Antriebskomponenten des Fahrzeugs strömt, wobei die Verbindungsleitungen des Kühlkreislaufs insgesamt mit dem Bezugszeichen 58 und die Antriebskomponenten mit 59 bezeichnet sind. In den Kühlkreislauf ist ein Kältemodul 60 geschaltet, das eine Kälteanlage beinhaltet, die einen Verdichter 61, einen Kondensator 62, eine Expansionseinrichtung 63 und einen Verdampfer 64 umfaßt. Das Kältemodul 60 ist kältemittelseitig hermetisch geschlossen, es besitzt jedoch Anschlüsse für Verbindungsleitungen 58, damit der Kondensator 62 und der Verdampfer 64 vom Kühlmittel des Kühlmittelkreislaufs beaufschlagt werden können.

Die zu kühlenden Antriebskomponenten 59 sind über entsprechende Verbindungsleitungen 58 in Serie mit dem Kondensator 62 und einem Wärmespeicher 65 geschaltet. Der Wärmespeicher 65 hat dabei dieselbe Funktion wie der Wärmespeicher 19 in der Fig. 1. Von dem Wärmespeicher 65 führt eine Verbindungsleitung 58 zu einem ersten Wegeventil 66, das als 4/2-Wegeventil ausgebildet ist. Von dem Verdampfer 64 führt eine Verbindungsleitung 58 zu einem Kältespeicher 85 und von dort zu einem Eingang des ersten Wegeventils 66. Die Ausgangsanschlüsse des ersten Wegeventils 66 sind jeweils mit einem der Wärmetauscher 40 und 50 verbunden, wobei die Ausgangsanschlüsse der Wärmetauscher 40 und 50 an die Eingänge eines zweiten Wegeventils 67 angeschlossen sind, welches ebenfalls als 4/2-Wegeventil ausgebildet ist. Einer der Ausgangsanschlüsse des zweiten Wegeventils 67 führt unter Zwischenschaltung einer ersten Kühlmittelpumpe 68 zum Kondensator 62 und der andere Ausgangsanschluß des Wegeventils 67 ist unter Zwischenschaltung einer zweiten Kühlmittelpumpe 69 mit dem Verdampfer 64 verbunden.

Der "Winterbetrieb" der in **Fig. 3** beschriebenen Anlage ist in **Fig. 3 a** dargestellt. Es ist daraus ersichtlich, daß zur Kühlung der Antriebskomponenten 59 das Kühlmittel mit Hilfe der ersten Kühlmittelpumpe 68 durch die Verbindungsleitungen 58 gepumpt wird und dabei die in den Antriebskomponenten 59 entstehende Verlustwärme aufnimmt. In dem den Antriebskomponenten 59 nachgeschalteten Wärmespeicher 65 wird, je nach Speichertemperatur und Temperatur des zugeführten Kühlmittels, Wärme aufgenommen oder abgegeben. Das Kühlmittel strömt vom Wärmespeicher 65 zu dem ersten Wegeventil 66, das beim "Winterbetrieb" eine solche Stellung einnimmt, daß der Wärmespeicher 65 mit dem zweiten Wärmetauscher 50 verbunden ist. In dem zweiten Wärmetauscher 50 wird die Wärmeenergie des Kühlmittels an die durch den Wärmetauscher 50 strömende Luft abgegeben. Aufgrund der Stellung des zweiten Wegeventils 67 ist der zweite Wärmetauscher 50 mit der ersten Kühlmittelpumpe 68 bzw. dem nachgeschalteten Kondensator 62 verbunden, in welchem das Kühlmittel die anfallende Kondensationswärme aufnimmt.

Der andere Zweig des Kühlmittelkreises ist beim "Winterbetrieb" so geschaltet, daß der Verdampfer 64 über den Kältespeicher 85 und die entsprechende Stellung des ersten Wegeventils 66 mit dem ersten Wärmetauscher 40 in Verbindung steht, d.h. dem ersten Wärmetauscher 40 wird Kühlmittel mit relativ niedriger Temperatur zugeführt. Das im Wärmetauscher 40 sich erwärmende Kühlmittel wird, über die entsprechende Stellung des zweiten Wegeventils 67, der zweiten Kühlmittelpumpe 69 zugeführt, die das Kühlmittel durch den Verdampfer 64 pumpt. Bei dieser Betriebsart dient der Kältespeicher 85 lediglich zur Aufrechterhaltung eines gleichmäßigen Temperturprofils.

Die Heizung des Fahrgastraums 51 wird dadurch bewirkt, daß durch die Abströmöffnung 53 Luft aus dem Fahrgastraum 51 abgesaugt wird, und zwar mit Hilfe des Gebläses 46. Die Luft strömt durch den ersten Wärmetauscher 40 und wird in diesem abgekühlt wobei gleichzeitig die Luft entfeuchtet wird. Das zweite Luftstromsteuerelement 48 teilt den Gesamtluftstrom auf, wobei ein Anteil durch den Fortluftkanal 56 ins Freie geleitet wird und ein anderer Teil als sogenannte Umluft durch den Luftführungskanal 54 zu einem Zuströmsteuerelement 49 geführt wird. Das durch den Fortluftkanal 56 ausgeblasene Luftvolumen wird durch Frischluft ergänzt, welche durch den Frischluftkanal 57 bei entsprechender Stellung des Zustromsteuerlementes 49 mit Hilfe des Gebläses 45 angesaugt wird. Der aus Umluft und Frischluft gebildete Gesamtluftstrom wird dann durch den zweiten Wärmetauscher 50 und die bedarfsweise zuschaltbare Zusatzheizung 55 geführt und schließlich durch die Zuluftöffnung 52 in den Fahrgastraum 51 eingeblasen.

Bei höheren Außentemperaturen wird die in Fig. 3 beschriebene Anlage so betrieben, wie dies in **Fig. 3 b** dargestellt ist; es ist dies der sogenannten "Sommerbetrieb". Die Kühlung der Antriebskomponenten 59 erfolgt wiederum dadurch, daß das mittels der ersten Kühlmittelpumpe 68 durch den Kondensator 62 und die Antriebskomponenten 59 gepumpte Kühlmittel die dort anfallende Wärme aufnimmt. Das Kühlmittel durchströmt dann den Wärmespeicher 65 und verläßt diesen auf einem relativ konstanten Temperaturniveau. Die Stellung des ersten Wegeventils 66 leitet diesen Kühlmittelstrom zum ersten Wärmetauscher 40, in welchem die Wärme an die diesen Wärmetauscher 40 durchströmende Luft abgegeben wird. Das den ersten Wärmetauscher 40 verlassende Kühlmittel wird aufgrund der Stellung des zweiten Wegeventils 67 wiederum der ersten Kühlmitelpumpe 68 zugeführt.

Im anderen Kühlmittelzweig pumpt die zweite Kühlmittelpumpe 69 Kühlmittel durch den Verdampfer 64, wodurch das Kühlmittel auf ein niederiges Temperaturniveau gebracht wird. Der Kältespeicher 85 entnimmt dem durchströmenden Kühlmittel Kälteenergie bis dessen Speicherkapazität erreicht ist. Aufgrund der Stellung des ersten Wegeventils 66 wird das im Verdampfer 64 stark abgekühlte Kühlmittel dem zweiten Wärmetauscher 50 zugeführt, so daß die diesen Wärmetauscher 50 durchströmende Luft abgekühlt wird. Dabei erwärmt sich das Kühlmittel im zweiten Wärmetauscher 50 und strömt aufgrund der Stellung des zweiten Wegeventils 67 zurück zur zweiten Kühlmittelpumpe 69. Da es im "Sommerbetrieb" das Bestreben ist, die Temperatur im Fahrgastraum 51 zu senken, bzw. auf einem niedrigen Temperaturniveau zu halten, wird die aus dem Fahrgastraum 51 durch die Abströmöffnung 53 abgesaugte Luft mit Hilfe des ersten Luftstromsteuerelementes 47 nahezu vollständig durch den Luftführungskanal 54* zu dem Zuströmsteuerelement 49 geleitet.

Wegen des erforderlichen Austauschs eines Teils des im Fahrgastraum 51 befindlichen Luftvolumens - wie dies bereits zu den vorherigen Figuren angegeben wurde - wird ein Anteil, der beispielsweise 20% des aus dem Fahrgastraum 51 abgesaugten Gesamtluftstroms betragen kann, durch das erste Luftstromsteuerelement 47 dem Gebläse 46 zugeführt. Zur Aufrechterhaltung der Kühlung des den ersten Wärmetauscher 40 durchströmenden Kühlmittels wird von dem Gebläse 46 durch einen Frischluftkanal 70 Umgebungsluft angesaugt, die gemeinsam mit dem Fortluftanteil den ersten Wärmetauscher 40 durchströmt und aufgrund der Stellung des zweiten Luftstromsteuerelementes 48 durch den Fortluftkanal 56 in die Umgebungsluft ausgeblasen wird. Der durch den Luftführungskanal 54* bzw. 54 von dem Gebläse 45 angesaugte Umluftstrom wird durch ein durch den Frischluftkanals 57 angesaugtes Luftvolumen ergänzt, wobei dieser Gesamtluftstrom den zweiten Wärmetauscher 50 beaufschlagt und in diesem abgekühlt wird. Diese Kaltluft wird dann durch die Zuluftöffnung 52 in den Fahrgastraum 51 geführt. Da ein erheblicher Anteil des durch den zweiten Wärmetauscher 50 geführten Luftstroms aus bereits relativ kalter Umluft besteht, muß im Wärmetauscher 50 im wesentlichen nur die Kühlleistung zur Abkühlung des Frischluftanteils erbracht werden. Der Kältespeicher 85 hat den wesentlichen Vorteil, daß bei Fahrtantritt sofort das zum Wärmetauscher 50 strömende Kühlmittel kalt ist und damit die dem Fahrgastraum 51 zugeführte Luft gekühlt werden kann. Damit wird ein rasches Abkühlen der Fahrgastraumluft erreicht, auch wenn das Fahrzeug eine Weile abgestellt war und sich durch Sonneneinstrahlung aufgeheizt hat.

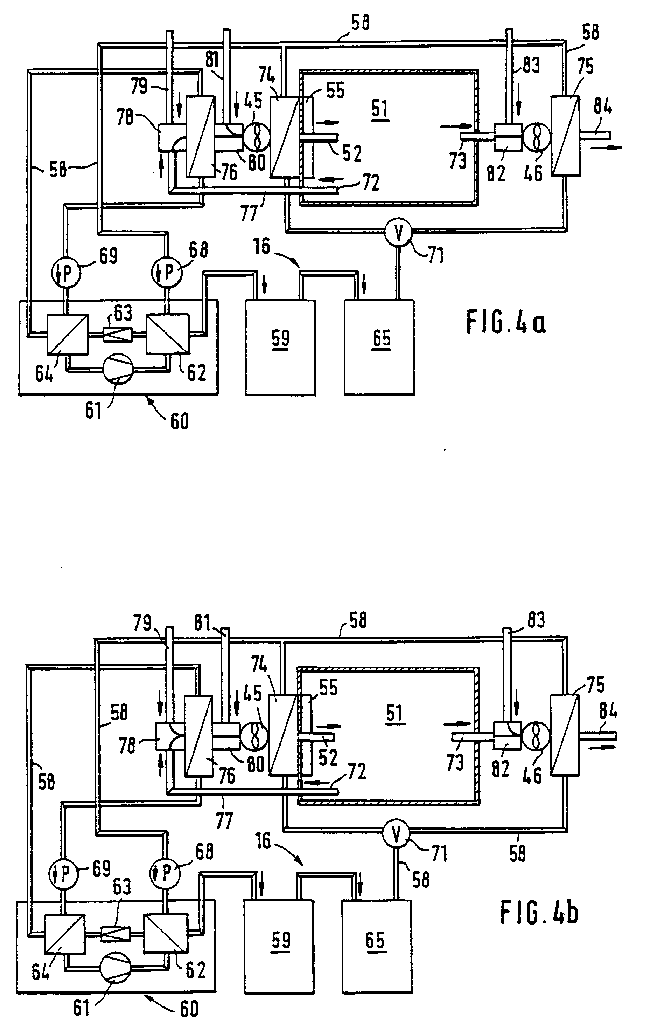

Das in **Fig. 4 a** und **4 b** beschriebene Ausführungsbeispiel zeigt wiederum in **Fig. 4 a** den "Winterbetrieb" und in **Fig. 4 b** den "Sommerbetrieb" der erfindungsgemäßen Klimatisierungs- und Kühlungseinrichtung. Dabei entspricht die Zuordnung der Antriebskomponenten 59, des Kältemoduls 60, des Wärmespeichers 65 und der beiden Kühlmittelpumpen 68 und 69 derjenigen in Fig. 3. Die den Wärmespeicher 65 verlassende Kältemittelleitung 58 führt zu einem 3/2-Wegeventil 71, von dem Verbindungsleitungen 58 zu jeweils einem zuluftseitig des Fahrgastraumes 51 angeordneten Wärmetauscher 74 und einem abluftseitig des Fahrgastraumes 51 angeordneten Wärmetauscher 75 führen. Ausgangsseitig der beiden Wärmetauscher 74 und 75 sind die Verbindungsleitungen 58 wieder zusammengeführt und mit der ersten Kühlmittelpumpe 68 verbunden.

Die zweite Kühlmittelpumpe 69 und der Verdampfer 64 befinden sich nunmehr in einem separaten Kühlmittelkreis, der stets von dem Kühlmittelkreis der Antriebskomponenten getrennt ist. Vom Verdampfer 64 ausgehend führt eine Verbindungsleitung 58 zu einem Wärmetauscher 76, der ausgangsseitig wiederum mit der zweiten Kühlmittelpumpe 69 in Verbindung steht. Der Fahrgastraum 51 besitzt zwei völlig separate und an unterschiedlichen Stellen des Fahrgastraumes 51 angeordnete Abströmöffnungen 72 und 73, wobei die erste Abströmöffnung 72 über einen Luftführungskanal 77 mit einem Zuluftsteuerelement 78 verbunden ist. In das Zuluftsteuerelement 78 mündet ein Frischluftkanal 79.

Dem Zuluftsteuerelement 78 ist der Wärmetauscher 76 nachgeschaltet, dem abströmseitig ein zweites Zuluftsteuerelement 80 nachgeordnet ist. Mit Hilfe des zweiten Zuluftsteuerelementes 80 kann durch einen weiteren Luftkanal 81 Frischluft angesaugt werden, wobei die Luftströmung durch das Gebläse 45 erzeugt wird, welches den Luftstrom durch den Wärmetauscher 74 sowie eine Zusatzheizung 55 und die Zuluftöffnung 52 in den Fahrgastraum 51 führt.

Der zweiten Abströmöffnung 73 ist ein drittes Zuluftsteuerelement 82 nachgeordnet, in das eine Kühlluftleitung 83 mündet. Das Gebläse 46 saugt Luft aus dem Fahrgastraum 51 bzw. durch den Kühlluftkanal 83 an und bläst diese durch den Wärmetauscher 75 und schließlich durch einen Abluftkanal 84 in die Umgebung.

Bei dem in **Fig. 4 a** dargestellten "Winterbetrieb" ist das 3/2-Wegeventil 71 so geschaltet, daß die den Wärmespeicher 65 verlassende Verbindungsleitung 58 mit dem zuluftseitig an dem Fahrgastraum 51 angeordneten Wärmetauscher 74 verbunden ist. Somit wird das Kühlmittel, das die erste Kühlmittelpumpe 68 durch den Kondensator 62, die Antriebskomponenten 59 und den Wärmespeicher 65 pumpt, durch den Wärmetauscher 74 geführt und gibt dort die Wärmeenergie des Kühlmittels an den Luftstrom, der dem Fahrgastraum 51 zugeführt wird, ab.

Das im Wärmetauscher 74 abgekühlte Kühlmittel wird wiederum von der ersten Kühlmittelpumpe 68 angesaugt.

Da nur eine begrenzte Heizenergie zur Verfügung steht, wird durch die erste` Abströmöffnung 72 Fahrgastraumluft abgesaugt, die dann durch den Luftführungskanal 77 und das erste Zuluftsteuerelement 78 in den Wärmetauscher 76 gelangt. In diesem Wärmetauscher wird die Luft entfeuchtet und die Temperatur etwas abgesenkt. In dem zweiten Zuluftsteuerelement wird der aus dem Wärmetauscher 76 austretenden Luft ein Frischluftanteil beigemengt, und der gesamte Luftstrom mittels des Gebläses 45 durch den Wärmetauscher 74 geblasen. Das durch letzteren strömende heiße Kühlmittel gibt seine Wärmeenergie an den Luftstrom ab, so daß durch die Zuluftöffnung 52 dem Fahrgastraum 51 Warmluft zugeführt wird. Entsprechend dem durch den Luftkanal 81 beigemischten Frischluftanteil wird ein entsprechendes Luftvolumen durch die zweite Abströmöffnung 73 abgesaugt, was mit Hilfe des Gebläses 46 erfolgt, welches die Luft durch den Abluftkanal 84 ins Freie transportiert.

Bei dem in **Fig. 4 b** dargestellten "Sommerbetrieb" ist das 3/2-Wegeventil 71 so geschaltet, daß das den Wärmespeicher 65 verlassende Kühlmittel zum Wärmetauscher 75 geführt wird. Dort gibt dieses Kühlmittel seine Wärmeenergie an den von dem Gebläse 46 erzeugten Luftstrom ab, welcher zum einen Teil aus durch die zweite Abströmöffnung 73 abgesaugter Fahrgastraumluft und zum anderen Teil aus durch den Kühlluftkanal 83 angesaugter Frischluft besteht. Von dem Wärmetauscher 75 wird das in diesem abgekühlte Kühlmittel zu der ersten Kühlmittelpumpe 68 zurückgeführt.

Die aus dem Fahrgastraum 51 durch die erste Abströmöffnung 72 und den Luftführungskanal 77 abgesaugte Umluft wird in dem ersten Zuluftsteuerelement 78 mit einem Anteil Frischluft vermengt, der durch den Frischluftkanal 79 einströmt. In dem Wärmetauscher 76 wird dieser Gesamtluftstrom entfeuchtet und dann durch das zweite Luftsteuerelement, das in dieser Betriebsweise den Luftkanal 81 absperrt, dem Gebläse 45 zugeführt, welches den Luftstrom ohne thermische Behandlung im Wärmetauscher 74 durch die Zuluftöffnung in den Fahrgastraum 51 befördert.

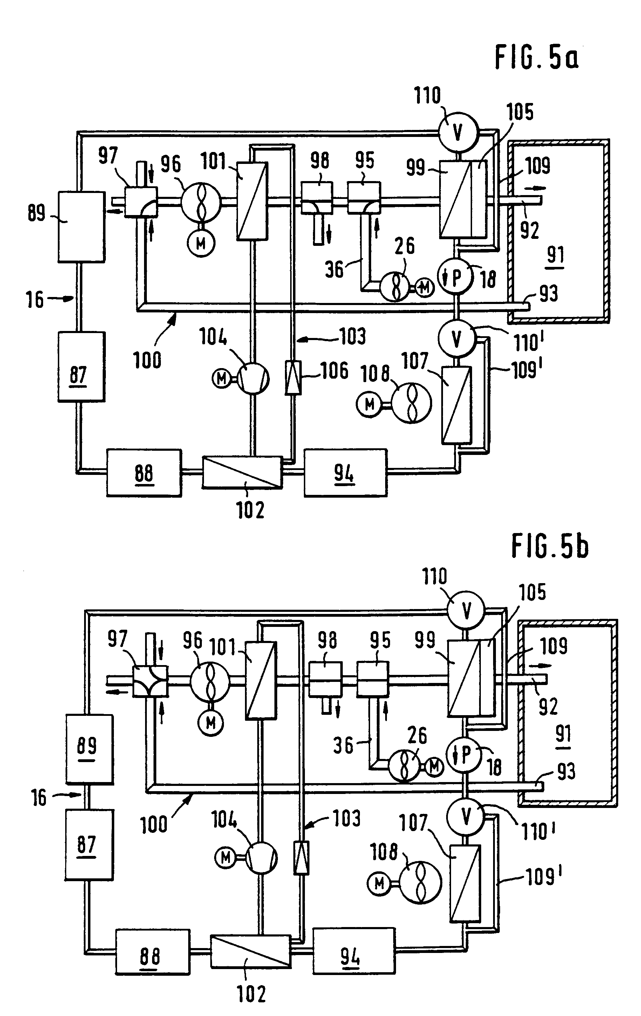

In Fig. **5 a** und **5 b** ist eine kombinierte Motorkühlungs- und Fahrgastraumklimatisierungsanlage gezeigt, wobei die Fig. 5 a die Funktion "Heizen", d.h. den "Winterbetrieb" und die Fig. 5 b die Funktion "Kühlen des Fahrgastraumes" den sogenannten "Sommerbetrieb" zeigt. An einem Fahrgastraum 91 ist eine Abströmöffnung 93 vorhanden, von der sich ein Luftführungkanal 100 zu einer Zuluftöffnung 92 erstreckt. In diesem Luftführungskanal 100 sind in der Reihenfolge der Aufzählung ein erstes Luftstromsteuerelement 97, ein Gebläse 96, ein Verdampfer 101, ein zweites Luftstromsteuerelement 98, ein Zuströmsteuerlement 95, ein Wärmetauscher 99 und eine Zusatzheizung 105 angeordnet. An das Zuströmsteuerelement 95 ist ein Frischluftkanal angeschlossen, durch den mittels eines Gebläses 26 Frischluft dem Wärmetauscher 99 zuführbar ist. Der Wärmetauscher 99 ist andererseits an einen Kühlkreislauf 16 anschließbar, der zur Kühlung einer Batterieeinheit 87, eines Antriebsmotors 88 und einer Leistungselektronik 94 dient. Es ist außerdem ein Wärmespeicher 89 vorgesehen, der dazu dient, die enormen Schwankungen der Wärmeentwicklung in den verschiedenen Aggregaten zu dämpfen. Zwischen der Leistungselektronik 94 und dem Antriebsmotor 88 befindet sich in dem Kühlmittelkreislauf 16 ein Kondensator 102 eines Kältemittelkreislaufs 103, der einen Kompressor 104, ein Expansionsventil 106 und den bereits erwähnten Verdampfer 101 umfaßt. Schließlich befindet sich in dem Kühlmittelkreislauf 16 noch ein weiterer Wärmetauscher 107, dem ein Lüfter 108 zum ausreichenden Kühlluftdurchtritt zugeordnet ist, und eine Kühlmittelpumpe 18 um einen ausreichenden Kühlmitteldurchfluß zu gewährleisten. Jeder der Wärmetauscher 99 und 107 ist mit einer Bypaßleitung 109, 109' versehen, welche über Ventile 110 und 110' steuerbar sind.

Gemäß der Darstellung in **Fig. 5 a** wird zum Heizen des Fahrgastraums 91 das durch die Abströmöffnung 93 abgezogene Luftvolumen in dem er-sten Luftstromsteuerelement 97 vollständig dem Verdampfer 101 zugeführt, und abströmseitig des Verdampfers 101 in dem zweiten Luftstromsteuerelement 98 aufgeteilt, und zwar in einen relativ geringen Teil Fortluft und einen größeren Teil Umluft, wobei diese Umluft dem Wärmetauscher 99 zugeführt wird. Diesem Umluftstrom wird vor dem Wärmetauscher 99 durch das Zuströmsteuerelement 95 ein Teil Frischluft zugegeben. Die im Wärmetauscher 99 aufgeheizte Luft, die gegebenenfalls mittels der Zusatzheizung 105 auf ein noch höheres Temperaturniveau gebracht werden kann, wird durch die Zuluftöffnung 92 in den Fahrgastraum 91 eingeblasen. Die in den Antriebskomponenten 87, 88 und 94 entstehende Wärme, die in Abhängigkeit des Fahrbetriebs sehr großen Schwankungen unterworfen ist, wird in dem Wärmespeicher 89 aufgenommen und von dort mit einem relativ konstanten Temperaturniveau aufgrund der Stellung des Ventils 110 durch den Wärmetauscher 99 und aufgrund der Stellung des Ventils 110' durch die Bypaßleitung 109' geleitet. Bei Betrieb des Kältemittelkreislaufs 103 wird der durch den Verdampfer 101 geleitete Luftstrom abgekühlt und dadurch entfeuchtet. Dabei nimmt das Kältemittel im Verdampfer 101 Wärme auf, die in dem Kondensator 102 an das Kühlmittel des Kühlkreislaufs 16 abgegeben wird.

Bei dem in der **Fig. 5 b** dargestellten Sommerbetrieb soll dem Fahrgastraum 91 kühle Luft zugeführt und trotzdem die Wärmeenergie aus den Antriebskomponenten 87, 88 und 94 abgeführt werden. Aufgrund der Stellung des ersten Luftstromsteuerelementes 97 wird ein großer Teil der aus dem Fahrgastraum 91 abgeführten Luftmenge als Fortluft in die Umgebung abgegeben. Ein entsprechendes Luftvolumen wird als Frischluft dem Luftführungskanal 100 zugeführt und von dem Gebläse 96 durch den Verdampfer 101 geführt. In dem Verdampfer 101 wird der Luftstrom stark abgekühlt und dann durch den Wärmetauscher 99, der jedoch bei dieser Betriebsart außer Funktion ist, dem Fahrgastraum 91 zugeführt. Aufgrund der Stellungen des zweiten Luftstromsteuerelementes 98 und des Zuströmsteuerelementes 95, bleibt der Luftstrom auf der Strecke zwischen dem Verdampfer 101 und dem Wärmetauscher 99 unbeeinflußt. Damit in dieser Betriebsart der Wärmetauscher 99 außer Funktion bleibt, ist das Ventil 110 in einer Stellung, die den Durchfluß durch die Bypaßleitung 109 freigibt und den Durchfluß durch den Wärmetauscher 99 sperrt. Damit die in dem Kühlmittel enthaltene Wärmeenergie abgeführt wird, nimmt das Ventil 110' eine Stellung ein, durch welche der Wärmetauscher 107 vom Kühlmittelstrom beaufschlagt ist. Für einen entsprechenden Kühlluftstrom durch den Wärmetauscher 107 sorgt der Lüfter 108.

Es ist durchaus in Betracht zu ziehen, die in Fig. 5 beschriebene Anordnug ohne das zweite Luftstromsteuerelement 98 und das Zuströmsteuerelement 95 mit der entsprechenden Frischluftleitung und dem Gebläse 26 auszuführen. In diesem Fall würde der zwischen dem Verdampfer 101 und dem Wärmetauscher 99 geführte Luftstrom stets unbeeinflußt bleiben und die Anteile von Fortluft und Frischluft würden alleine durch das erste Luftstromsteuerelement 97 bestimmt.

In den vorstehend beschriebenen Ausführungsbeispielen sind die luftseitigen Steuerelemente in sperrender Stellung oder Durchgangsstellung dargestellt. Selbstverständlich ist je nach gewünschter Temperatur des Kühlluftstromes und der Heiz- bzw. Klimatisierungsluft eine Regelung durch eine Vielzahl von Zwischenstellungen dieser Luftsteuerelemente möglich. Die beschriebenen kühlmittelseitigen Wegeventile sind dagegen so ausgeführt, daß sie lediglich die dargestellten Schaltstellungen einnehmen, jedoch kann durch einen Taktbetrieb im Bedarfsfall auch eine Aufspaltung des Kühlmittelstromes auf die Wärmetauscher 74 und 75 erfolgen.

## Patentansprüche

1. Verfahren zur Kühlung von Antriebskomponenten und zur Heizung eines Fahrgastraums eines Kraftfahrzeugs, insbesondere eines Elektromobils, bei welchem ein Kühlmittel durch Kühlkörper der Antriebskomponenten (17, 59, 87, 88, 94 ) geleitet und einem Wärmetauscher ( 9, 40, 50, 74, 99 ) zugeführt wird und zur Heizung des Fahrgastraumes ( 1, 51, 91 ) diesem ein nach dem Bedarf temperierter Luftvolumenstrom zugeleitet und ein entsprechender Luftvolumenstrom aus dem Fahrgastraum abgeführt wird, wobei der aus dem Fahrgastraum abgeführte Luftstrom einen Anteil Fortluft und einen Anteil Umluft umfaßt und dem Umluftstrom ein der Fortluft entsprechender komplementärer Anteil Frischluft beigegeben wird, **dadurch gekennzeichnet,** daß ein mittels eines Gebläses erzeugter Luftstrom aus dem Fahrgastraum abgeführt und von mindestens einem vor dem Wärmetauscher ( 9, 40, 50, 74, 99, ) befindlichen Luftstromsteuerelement ( 7, 47, 78, 97 ) in einen Anteil Fortluft und einen Anteil Umluft geteilt wird und der Umluftstrom durch den Wärmetauscher ( 9, 40, 50, 74, 99 ) für das Kühlmittel der Antriebskomponenten (17, 59, 87, 88, 94 ) geleitet wird, und daß der aus dem Wärmetauscher austretende Luftstrom als Heizluft für den Fahrgastraum ( 1, 51, 91 ) in diesen rückführbar ist.

2. Verfahren nach Anspruch 1, **dadurch gekennzeichnet,** daß in dem ersten Luftstromsteuerelement (7, 47, 78, 97) oder stromab von diesem dem Umluftstrom ein komplementärer Anteil Frischluft beigegeben und anschließend durch einen Wärmetauscher (9, 40, 50, 74) für das Kühlmittel der Antriebskomponenten geleitet wird, und daß der aus dem Wärmetauscher austretende Luftstrom in einem zweiten Luftstromsteuerelement (8) in einen Anteil Heizluft für den Fahrgastraum und einen Anteil Fortluft geteilt wird.

3. Verfahren nach Anspruch 2, **dadurch gekennzeichnet,** daß stromab des zweiten Luftstromsteuerlementes (8, 48) die Temperatur der Heizluft mittels einer weiteren Wärmequelle (28, 32, 55, 105) auf ein höheres Niveau angehoben wird.

4. Verfahren nach Anspruch 2, **dadurch gekennzeichnet,** daß der vom ersten Luftstromsteuerlement (7) bestimmbare Fortluftstrom durch einen Wärmetauscher (21) geführt wird, in welchem der Fortluft die Wärmeenergie entzogen und diese zur Vorwärmung der Frischluft benutzt wird.

5. Einrichtung zum Kühlen von Antriebskomponenten und zum Heizen eines Fahrgastraumes eines Fahrzeugs, insbesondere eines Elektromobils, mit einem Kühlkreislauf (16) zur Kühlung der Antriebskomponenten (17, 59, 87, 88, 94), in dem ein Wärmetauscher (9, 40, 74, 99,) angeordnet ist, und einem von einer Abströmöffnung (3, 53, 93) des Fahrgastraums (1, 51, 91) zu einer Zuluftöffnung (2, 52, 92,) reichenden Luftführungskanal (4, 54, 100), aus dem ein Teil des Luftstroms abgezweigt und/oder Frischluft zuführbar ist, **dadurch gekennzeichnet,** daß in dem Luftführungskanal (4, 54, 100) mindestens ein Gebläse (5, 6, 45, 96) zur Erzeugung einer angemessenen Luftströmung und der in dem Kühlkreislauf (16) der Antriebskomponenten (17, 59, 87, 88, 94) befindliche und von dessen Kühlmittel beaufschlagte Wärmetauscher (9, 40, 99) vorgesehen sind, wobei im Luftführungskanal (4, 54, 100) stromauf des Gebläses (6, 45, 96) ein erstes Luftstromsteuerelement (7, 47, 78, 97) angeordnet ist, das den Abluftstrom in einen Umluftanteil und einen Fortluftanteil teilt, und stromab des Luftstromsteuerelementes bzw. des Gebläses (6, 45, 96) der Wärmetauscher (9, 40, 99) angeordnet ist.

6. Einrichtung nach Anspruch 5, **dadurch gekennzeichnet,** daß strömungsmäßig nach dem Wärmetauscher (9, 40) ein zweites Luftstromsteuerelement (8, 48) , das den Anteil von in den Fahrgastraum (1, 51) eingeleiteter Heizluft und an die Umgebung abzuführender Kühlluft steuert, angeordnet ist.

7. Einrichtung nach Anspruch 5, **dadurch gekennzeichnet,** daß ein weiterer vom Kühlmittel durchströmbarer Wärmetauscher (75) vorgesehen ist, der in einem an einer zweiten Abströmöffnung (73) beginnenden Fortluftkanal (84) des Fahrgastraumes (51) angeordnet ist, und wobei zwischen der zweiten Abströmöffnung (73) und dem Wärmetauscher (75) ein Zuströmsteuerelement (82) vorgesehen ist, in das ein Kühlluftkanal (83) mündet.

8. Einrichtung nach Anspruch 6, **dadurch gekennzeichnet,** daß der Luftführungskanal (4) mindestens drei Abschnitte (41, 42, 43) umfaßt, wobei ein erster Abschnitt (41) von dem Fahrgastraum (1) bis zu dem ersten Luftstromsteuerelement (7) führt, ein zweiter Abschnitt (42) das erste Luftstromsteuerelement (7) mit dem zweiten Luftstromsteuerelement (8) verbindet und ein dritter Abschnitt (43) vom zweiten Luftstromsteuerelement (8) zum Fahrgastraum (1) führt, wobei im zweiten Abschnitt (42) der Wärmetauscher (9) und das zugeordnete Gebläse (6) angeordnet sind.

9. Einrichtung nach Anspruch 8, **dadurch gekennzeichnet,** daß unmittelbar nach dem ersten Luftstromsteuerelement (7) und dem Beginn des zweiten Abschnitts (42) ein Fortluft/Frischluft-Wärmetauscher (21) vorgesehen ist und daß von einem Frischluftkanal (22) eine steuerbare Bypassleitung (23) abzweigt, die den Fortluft/Frischluft-Wärmetauscher (21) zu dem zweiten Abschnitt (42) hin überbrückt.

10. Einrichtung nach einem der Ansprüche 8 oder 9, **dadurch gekennzeichnet,** daß in dem ersten Abschnitt (41) oder in einem Zuluftkanal (36) ein zusätzliches Gebläse (5, 26) angeordnet ist.

11. Einrichtung nach einem der Ansprüche 8 bis 10, **dadurch gekennzeichnet,** daß in dem dritten Abschnitt (43) unmittelbar vor dem Eintritt in den Fahrgastraum (1) eine Luftmischkammer (11) angeordnet ist, in die eine Kaltluftleitung (10) mündet, und daß in der Luftmischkammer (11) ein Verstellelement angeordnet ist, das die Anteile der von dem zweiten Luftstromsteuerelement (8) kommenden und von der Kaltluftleitung (12) kommenden Luftströme beeinflußt, wobei vorzugsweise in der Kaltluftleitung (12) ein Gebläse (14) und ein Verdampfer bzw. ein Verdunstungskühler (45) angeordnet sind.

12. Einrichtung nach Anspruch 8, **dadurch gekennzeichnet,** daß in dem Luftführungskanal (4, 100) ein Verdampfer (31, 101) eines Kältemittelkreislaufs (103)angeordnet ist, wobei stromab des Verdampfers (31, 101) zunächst ein steuerbarer Strömungsmengenteiler (29, 98) und diesem nachgeschaltet ein steuerbarer Frischlufteingang (36) angeordnet sind.

13. Einrichtung nach Anspruch 12, **dadurch gekennzeichnet,** daß zwischen dem ersten Abschnitt (41) und dem zweiten Abschnitt (42) ein vierter Abschnitt (44) des Luftführungskanals (4) gebildet und in diesem der Verdampfer (31) angeordnet ist, und daß in dem zweiten Abschnitt (42) ein Kondensator (32) vorgesehen ist, der sich stromab des Frischlufteingangs (36) befindet.

14. Einrichtung nach Anspruch 12, **dadurch gekennzeichnet,** daß ein Kondensator (102) des Kältemittelkreislaufs (103) in den Kühlkreislauf (16) für die Antriebskomponenten (87, 88, 94) eingebunden ist.

15. Einrichtung nach Anspruch 13, **dadurch gekennzeichnet,** daß der Strömungsmengenteiler (29) zusätzlich zu dem zum Kondensator (32) führenden Ausgang zwei weitere Ausgänge besitzt, von denen einer in die Umgebungsluft führt und an einen anderen ein den Kondensator (32) und Wärmetauscher (9) umgehender Bypass (37) angeschlossen ist.

16. Einrichtung nach einem der Ansprüche 8 bis 15, **dadurch gekennzeichnet,** daß eine weitere Wärmequelle, vorzugsweise eine elektrische Zusatzheizung (1, 28, 105), vorgesehen ist, die im dritten Abschnitt (43) oder unmittelbar vor der Zuluftöffnung (2, 92,) angeordnet ist.

17. Einrichtung nach einem der Ansprüche 5 bis 7, **dadurch gekennzeichnet,** daß ein Kältemodul (60) vorhanden ist, das einen Verdampfer (64) und einen Kondensator (62) umfaßt, die jeweils in getrennten Strömungszweigen vom Kühlmittel des Kühlkreislaufs beaufschlagt werden, wobei in jedem der Strömungszweige ein Kühlmittel/Luft-Wärmetauscher (40, 50, bzw. 74, 75, 76) angeordnet ist und Ventilmittel (66, 67, bzw. 71) zum Umschalten von zumindest einem der Strömungszweige zur wahlweisen Durchströmung der Wärmetauscher (40, 50, bzw. 74, 75) vorgesehen sind.

18. Einrichtung nach Anspruch 17, **dadurch gekennzeichnet,** daß eine zweite Kühlmittelpumpe (69) vorhanden ist, wobei die erste Kühlmittelpumpe (68) in dem den Motor und die Batterieeinheit kühlenden Strömungszweig, in dem sich auch der Kondensator (62) befindet, angeordnet ist, und die zweite Kühlmittelpumpe (69) in dem den Verdampfer (64) beaufschlagenden Strömungszweig eingesetzt ist.

19. Einrichtung nach Anspruch 17 oder 18, **dadurch gekennzeichnet,** daß die Ventilmittel ein erstes 4/2-Wegeventil (66) auf der Eingangsseite beider Wärmetauscher (40, 50) und ein zweites 4/2-Wegeventil (67) an den Ausgängen der beiden Wärmetauscher (40, 50) umfassen.

20. Einrichtung nach Anspruch 19, **dadurch gekennzeichnet,** daß in dem Strömungszweig zwischen Verdampfer (64) und dem ersten 4/2-Wegeventil (66) ein Kältemittelspeicher (85) und in dem Strömungszweig zwischen Antrieb (59) und dem ersten 4/2-Wegeventil (66) ein Wärmespeicher und/oder eine Zusatzheizung (65) angeordnet sind.

21. Einrichtung nach Anspruch 7, **dadurch gekennzeichnet,** daß in den Kühlkreislauf (16) bzw. in die Verbindungsleitung (58) mindestens ein 3/2-Wegeventil (71, 110, 110') geschaltet ist, das wahlweise einen der beiden Wärmetauscher (74, 75, bzw. 99, 107) mit dem Kühlkreislauf (16) verbindet.

22. Einrichtung nach Anspruch 7 oder 21, **dadurch gekennzeichnet,** daß jedem der Wärmetauscher (74, 75, 99, 107) ein Gebläse (45, 46, 96, 108) zugeordnet ist, deren Leistung unabhängig voneinander steuerbar ist.

## Claims

1. Method for the cooling of driving components and for the heating of a passenger compartment of a vehicle, in particular an electric vehicle, in which method a cooling agent is conducted through cooling bodies of the driving components (17, 59, 87, 88, 94) and fed to a heat exchanger (9, 40, 50, 74, 99), and, in order to heat the passenger compartment (1, 51, 91), is conducted thereto in an air volume flow which is moderated as required and a corresponding air volume flow is conducted away from the passenger compartment, wherein the air flow conducted away from the passenger compartment comprises a portion of escaping air and a portion of circulating air, and a portion of fresh air, which is complementary to the escaping air, is added into the circulating air, characterised in that an air flow which is generated by means of a fan is conducted away from the passenger compartment and divided into a portion of escaping air and a portion of circulating air by means of at least one air flow control element (7, 47, 78, 97) which is located upstream the heat exchanger (9, 40, 50, 74, 99), and the circulating air is conducted through the heat exchanger (9, 40, 50, 74, 99) for the cooling agent of the driving components (17, 59, 87, 88, 94); and in that the air flow which leaves the heat exchanger can be conducted back into the passenger compartment (1, 51, 91) as heating air therefor.

2. Process according to Claim 1, characterised in that in the first air flow control element (7, 47, 78, 97), or downstream thereof, a complementary portion of fresh air is added to the circulating air flow and, subsequently, is conducted through a heat exchanger (9, 40, 50, 74) for the cooling agent of the driving component; and in that the air flow leaving the heat exchanger is divided in a second air flow control element 8 into a portion of heating air for the passenger compartment and one portion of escaping air.

3. Process according to Claim 2, characterised in that downstream of the second air flow control element (8, 48) the temperature of the heating air is increased to a higher level by means of a further heat source (28, 32, 55, 105).

4. Process according to Claim 2, characterised in that the flow of escaping air which can be determined by the first air flow control element (7) is conducted through a heat exchanger (21), in which the heat energy is removed from the escaping air and used to preheat the fresh air.

5. Device for cooling driving components and for heating the passenger compartment of a vehicle, in particular an electric vehicle, with a cooling circuit (16) for cooling the driving components (17, 59, 87, 88, 94), in which a heat exchanger (9, 40, 74, 99) is disposed, and an air conducting channel (4, 54, 100) extending from an outflow aperture (3, 53, 93) of the passenger compartment (1, 51, 91) to an air inlet aperture (2, 52, 92), from which channel one portion of the air flow is branched off and/or fresh air can be supplied, characterised in that in the air conducting channel (4, 54, 100) there are provided at least one fan (9, 6, 45, 96) for the generation of an appropriate air flow and the heat exchanger (9, 40, 99) which is located in the cooling circuit (16) of the driving components (17, 59, 87, 88, 94) and is acted on by the cooling agent thereof, wherein a first air flow control element (7, 47, 78, 97) is disposed in the air conducting channel (4, 54, 100) upstream of the fan (6, 45, 96), which first air flow control element divides the outgoing air flow into a circulating air portion and an escaping air portion, and the heat exchanger (9, 40, 99) is disposed downstream of the air flow control element or the fan (6, 45, 96).

6. Device according to Claim 5, characterised in that a second air flow control element (8, 48) is disposed after the heat exchanger (9, 40) when viewed in the direction of flow, which second air flow control element controls the portion of the heating air which has been introduced into the passenger compartment (1, 51) and the cooling air which is to be conducted out into the environment.

7. Device according to Claim 5, characterised in that there is provided a further heat exchanger (75) which can be flowed through by the cooling agent, which further heat exchanger is disposed in an escaping air channel (84) of the passenger compartment (51) which channel begins at a second outflow aperture (73), and wherein an inflow control element (82) which opens into a cooling air channel (83), is provided between the second outflow aperture (73) and the heat exchanger (75).

8. Device according to Claim 6, characterised in that the air conducting channel (4) comprises at least three sections (41, 42, 43), wherein a first section (41) leads from the passenger compartment (1) to the first air flow control element (7), a second section (42) connects the first air flow control element (7) to the second air flow control element (8), and a third section (43) leads from the second air flow control element (8) to the passenger compartment (1), wherein the heat exchanger (9) and the associated fan (6) are disposed in the second section (42).

9. Device according to Claim 8, characterised in that immediately after the first air flow control element (7) and the start of the second section (42) there is provided an escaping air/fresh air heat exchanger (21); and in that a controllable bypass line (23) branches off from a fresh air channel (22), which controllable bypass line bridges over the escaping air/fresh air heat exchanger (21) to the second section (42).

10. Device according to either one of Claims 8 or 9, characterised in that an additional fan (5, 26) is disposed in the first section (41) or in an air inlet channel (36).

11. Device according to any one of Claims 8 to 10, characterised in that in the third section (43) immediately in front of the entry into the passenger compartment (1) there is disposed an air mixing chamber (11), into which the one cold air line (10) opens; and in that in the air mixing chamber (11) there is disposed an adjusting element which influences the portions of the air flows coming from the second air flow control element (8) and from the cooling air line (12), wherein, advantageously, a fan (14) is disposed in the cooling air channel (12) and an evaporator or an evaporating cooler (45) is disposed in the cooling air line (12).

12. Device according to Claim 8, characterised in that an evaporator (31, 101) of a cooling agent circuit (103) is disposed in the air conducting channel (4, 100), wherein, downstream of the evaporator (31, 101), there is disposed first a controllable flow amount divider (29, 98) and, connected after this, a controllable fresh air inlet (36).

13. Device according to Claim 12, characterised in that between the first section (41) and the second section (42) there is formed a fourth section (44) of the air flow channel (4), and the evaporator (31) is disposed therein; and in that, in the second section (42), there is provided a capacitor (32), which is located downstream of the fresh air inlet (36).

14. Device according to Claim 12, characterised in that a capacitor (102) of the cooling agent circuit (103) is integrated into the cooling circuit (60) for the driving components (87, 88, 94).

15. Device according to Claim 13, characterised in that the flow amount divider (29) comprises, in addition to the outlet leading to the capacitor (32), two further outlets, of which one leads into the atmosphere and the other is connected to a bypass (37) passing around the capacitor (32) and the heat exchanger (9).

16. Device according to any one of Claims 8 to 15, characterised in that a further heat source, advantageously an electrical additional heating means (1, 28, 105), is provided, this being disposed in the third section (43) or immediately in front of the air inlet aperture (2, 92).

17. Device according to any one of Claims 5 to 7, characterised in that there is provided a cooling module (60) which comprises an evaporator (64) and a capacitor (62), which are acted on by cooling agent of the cooling circuit in separate flow branches in each case, wherein in each of the flow branches there is disposed a cooling agent/air heat exchanger (40, 50 or 74, 75, 76), and valve means (66, 67, or 71) are provided for changing over at least one of the flow branches for the selective throughflow of the heat exchangers (40, 50 or 74, 75).

18. Device according to Claim 17, characterised in that a second cooling agent pump (69) is provided, wherein the first cooling agent pump (68) is arranged in the flow branch which cools the motor and the battery unit, in which the capacitor (62) is also disposed, and the second cooling agent pump (69) is integrated in the flow branch which acts on the evaporator (64).

19. Device according to Claim 17 or Claim 18, characterised in that the valve means comprises a first 4/2 distributing valve (66) on the entry side of both heat exchangers (40, 50) and a second 4/2 distributing valve (67) on the outlets of the two heat exchangers (40, 50).

20. Device according to Claim 19, characterised in that in the flow branch between the evaporator (64) and the first 4/2 distributing valve (66) there is disposed a cooling agent reservoir (85) and in the flow branch between the drive (59) and the first 4/2 distributing valve (66) there is disposed a heat reservoir and/or an additional heating means (65).

21. Device according to Claim 7, characterised in that at least one 3/2 distributing valve (71, 110, 110') is connected in the cooling circuit (16) or in the connection line (58), which valve selectively connects one of the two heat exchangers (74, 75 or 99, 107) to the cooling circuit (16).

22. Device according to Claim 7 or Claim 21, characterised in that a fan (45, 46, 96, 108) is associated with each of the heat exchangers (74, 75, 99, 107), the output of which fans can be controlled independently of one another.

## Revendications

1. Procédé de refroidissement de composants d'entraînement et de chauffage d'un habitacle d'un véhicule, notamment d'un véhicule électrique, où un réfrigérant est canalisé à travers des corps de refroidissement des composants (17, 59, 87, 88, 94) et à travers un échangeur de chaleur (9, 40, 50, 74, 99) et, en vue d'un chauffage de l'habitacle (1, 51, 91), un écoulement volumique d'air, tempéré en cas de besoin, est introduit dans cet habitacle tandis qu'un écoulement volumique d'air correspondant est évacué de l'habitacle, l'écoulement d'air évacué de l'habitacle contenant une proportion d'air d'échappement et une proportion d'air de circulation, une proportion complémentaire d'air frais étant ajoutée, en correspondance avec l'air d'échappement, à l'écoulement d'air de circulation, procédé caractérisé en ce qu'un écoulement d'air produit au moyen d'un ventilateur est évacué de l'habitacle et est divisé par au moins un élément de commande d'écoulement d'air (7, 47, 78, 97), situé avant l'échangeur de chaleur (9, 40, 50, 74, 99), en une proportion d'air d'échappement et une proportion d'air de circulation et l'écoulement d'air de circulation est canalisé à travers l'échangeur de chaleur (9, 40, 50, 74, 99) traversé par le réfrigérant des composants d'entraînement (17, 59, 87, 88, 94), et en ce que l'écoulement d'air sortant de l'échangeur de chaleur, servant d'air de chauffage de l'habitacle (1, 51, 91), peut être renvoyé dans celui-ci.

2. Procédé selon la revendication 1, caractérisé en ce que, dans le premier élément de commande d'écoulement d'air (7, 47, 78, 97), ou bien en aval de celui-ci, une proportion complémentaire d'air frais est ajoutée à l'écoulement d'air de circulation et elle est ensuite canalisée de façon à traverser un échangeur de chaleur (9, 40, 50, 74), prévu pour le réfrigérant des composants d'entraînement, et en ce que l'écoulement d'air sortant de l'échangeur de chaleur est divisé, dans un second élément de commande d'écoulement d'air (8), en une fraction d'air de chauffage de l'habitacle et une fraction d'air d'échappement.

3. Procédé selon la revendication 2, caractérisé en ce que, en aval du second élément de commande d'écoulement d'air ( 8, 48), la température de l'air de chauffage est portée à un niveau supérieur au moyen d'une autre source de chaleur (28, 32, 55, 105).

4. Procédé selon la revendication 2, caractérisé en ce que l'écoulement d'air d'échappement pouvant être réglé par le premier élément de commande d'écoulement d'air (7) est canalisé à travers un échangeur de chaleur (21) où l'énergie thermique est extraite de l'air d'échappement et est utilisée pour un préchauffage de l'air

5. Installation de refroidissement de composants d'entraînement et de chauffage d'un véhicule, notamment d'un véhicule électrique comportant un circuit de refroidissement (16) pour refroidir les composants d'entraînement (17, 59, 87, 88, 94), où il est prévu un échangeur de chaleur (9, 40, 74, 99), ainsi qu'un canal de guidage d'air (4, 54, 100) s'étendant depuis une ouverture de décharge d'écoulement ( 3, 53, 93) de l'habitacle (1, 51, 91) jusqu'à une ouverture d'entrée d'air (2, 52, 92) et à partir duquel une proportion de l'écoulement d'air est dérivée et/ou de l'air frais peut être introduit, installation caractérisée en ce qu'il est prévu dans le canal de guidage d'air (4, 54, 100) au moins un ventilateur (5, 6, 45, 96) pour produire un écoulement d'air dosé ainsi que l'échangeur de chaleur (9, 40, 99) situé dans le circuit de refroidissement (16) des composants d'entraînement (17, 59, 87, 88, 94) et traversé par le réfrigérant, en ce qu'il est prévu dans le canal de guidage d'air (4, 54, 100) en amont du ventilateur (6, 45, 96) un premier élément de commande d'écoulement d'air (7, 47, 78, 97) qui divise l'écoulement d'air sortant en une fraction d'air de circulation et une fraction d'air d'échappement et en ce que le dit échangeur de chaleur (9, 40, 99) est disposé en aval de l'élément de commande d'écoulement d'air ou du ventilateur (6, 45, 96).

6. Installation selon la revendication 5, caractérisée en ce qu'il est prévu après l'échangeur de chaleur (9, 40), en considérant le sens d'écoulement, un second élément de commande d'écoulement d'air (8, 48) qui commande la proportion d'air de chauffage à introduire dans l'habitacle (1, 51) et la proportion d'air de refroidissement à décharger dans l'atmosphère ambiante.

7. Installation selon la revendication 5, caractérisée en ce qu'il est prévu un autre échangeur de chaleur (75) pouvant être traversé par le réfrigérant et qui est disposé dans un canal d'échappement d'air (84) de l'habitacle (51) commençant à une seconde ouverture de décharge d'écoulement (73) et en ce qu'il est prévu entre la seconde ouverture de décharge d'écoulement (73) et l'échangeur de chaleur (75) un élément (82) de commande d'entrée d'écoulement (82) dans lequel débouche un canal d'air de refroidissement (83).

8. Installation selon la revendication 6, caractérisée en ce que le canal de guidage d'air (4) comporte au moins trois parties (41, 42, 43), dont une première partie (41) s'étend depuis l'habitacle (1) jusqu'au premier élément de commande d'écoulement d'air (7), une seconde partie (42) relie le premier élément de commande d'écoulement d'air (7) avec le second élément de commande d'écoulement d'air (8) et une troisième partie (43) s'étend du second élément de commande d'écoulement d'air (8) jusqu'à l'habitacle (1), l'échangeur de chaleur (9) et le ventilateur associé étant disposés dans la seconde partie (42).

9. Installation selon la revendication 8, caractérisée en ce qu'il est prévu immédiatement après le premier élément de commande d'écoulement d'air (7) et le début de la seconde partie (42) un échangeur de chaleur air d'échappement/air frais (21) et en ce que d'un canal d'air frais (22) diverge un conduit de dérivation (23) pouvant être commandé et court-circuitant l'échangeur de chaleur air d'échappement/air frais (21) par rapport à la seconde partie (42).

10. Installation selon une des revendications 8 et 9, caractérisée en ce qu'un ventilateur additionnel (5, 26) est disposé dans la première partie (41) ou dans un canal d'admission d'air (36).

11. installation selon une des revendications 8 à 10, caractérisée en ce qu'il est prévu dans la troisième partie (43), immédiatement avant l'entrée dans l'habitacle (1), une chambre de mélange d'air (11) dans laquelle débouche un conduit d'air froid (10) et en ce qu'il est prévu dans la chambre de mélange d'air (11) un élément de réglage qui agit sur les proportions des écoulements d'air provenant du second élément de commande d'écoulement d'air (8) et du conduit d'air froid (12), et il est prévu avantageusement dans le conduit d'air froid (12) un ventilateur (14) ainsi qu'un évaporateur ou un refroidisseur par évaporation (45).

12. Installation selon la revendication 8, caractérisée en ce qu'il est prévu dans le canal de guidage d'air (4, 100) un évaporateur (31, 101) faisant partie d'un circuit de réfrigérant (103) et en ce qu'il est prévu en aval de l'évaporateur (31, 101) un répartiteur d'écoulement (29, 98) pouvant être commandé et, après celui-ci, une entrée d'air frais (36) pouvant être commandée.

13. Installation selon la revendication 12, caractérisée en ce qu'il est prévu entre la première partie (41) et la seconde partie (42) une quatrième partie (44) du canal de guidage d'air (4) dans laquelle est disposé l'évaporateur (31) et en ce qu'il est prévu dans la seconde partie (42) un condenseur (32) situé en aval de l'entrée d'air frais (36).

14. Installation selon la revendication 12, caractérisée en ce qu'un condenseur (102) du circuit de réfrigérant (103) est incorporé dans le circuit, (16) de refroidissement des composants d'entraînement (87, 88, 94).

15. Installation selon la revendication 13, caractérisée en ce que le répartiteur d'écoulement (29) comporte, en addition à la sortie aboutissant au condenseur (32), deux autres sorties dont l'une conduit à l'atmosphère ambiante et l'autre est reliée à un conduit de dérivation (37) contournant le condenseur (32) et l'échangeur de chaleur (9).

16. Installation selon une des revendications 8 (ouverture 15, caractérisée en ce qu'il est prévu une autre source de chaleur, de préférence un élément de chauffage électrique additionnel (1, 28, 105), qui est disposé dans la troisième partie (43) OU bien immédiatement avant l'ouverture d'admission d'air (2, 92).

17. Installation selon une des revendications 5 a 7, caractérisée en ce qu'il est prévu un module de refroidissement (50) qui comprend un évaporateur (64) et un condenseur (62), qui sont respectivement disposés dans des dérivations séparées de passage du réfrigérant dans le circuit de refroidissement et il est prévu dans chacune des dérivations d'écoulement un échangeur de chaleur réfrigérant/air (40, 50, ou 74, 75, 76) et en outre il est prévu des moyens formant soupapes (66, 67 ou 71) pour produire une commutation d'au moins une des dérivations d'écoulement en vue de faire passer sélectivement un écoulement dans les échangeurs de chaleur (40, 50, ou 74, 75).

18. Installation selon la revendication 17, caractérisée en ce qu'il est prévu une seconde pompe à réfrigérant (69), la première pompe à réfrigérant (68) étant disposée dans la dérivation d'écoulement assurant un refroidissement du moteur et de l'ensemble de batteries et dans laquelle se trouve également le condenseur (62) tandis que la seconde pompe à réfrigérant (69) est disposée dans la dérivation d'écoulement sollicitant l'évaporateur (64).

19. Installation selon la revendication 17 ou 18, caractérisée en ce que les moyens formant soupapes comprennent une première soupape de distribution à 4/2 voies (66) située sur le côté d'entrée des deux échangeurs de chaleur (40, 50) et une seconde soupape de distribution à 4/2 voies (67) située aux sorties des deux échangeurs de chaleur (40, 50).

20. Installation selon la revendication 19, caractérisée en ce qu'il est prévu un accumulateur de réfrigérant (85) dans la dérivation d'écoulement entre l'évaporateur (64) et la première soupape de distribution à 4/2 voies (66) et en ce qu'il est prévu dans la dérivation d'écoulement entre l'entraînement (59) et la première soupape de distribution à 4/2 voies (66) un accumulateur de chaleur et/ou un élément de chauffage additionnel (65).

21. Installation selon la revendication 7, caractérisée en ce qu'il est prévu dans le circuit de refroidissement (16) ou bien dans le conduit de liaison (58) au moins une soupape de distribution à 3/2 voies (71, 110, 110') qui relie sélectivement un des deux échangeurs de chaleur (74, 75, ou 99, 107) avec le circuit de refroidissement (16).

22. Installation selon la revendication 7 ou 21, caractérisée en ce qu'à chacun des échangeurs de chaleur (74, 75, 99, 107) est associé un ventilateur (45, 46, 96, 108), les puissances desdits ventilateurs pouvant être commandées indépendamment l'une de l'autre.
